(19) Europäisches Patentamt
European Patent Office
Office européen des brevets

(11) EP 1 399 513 B1

(12) **EUROPÄISCHE PATENTSCHRIFT**

(45) Veröffentlichungstag und Bekanntmachung des Hinweises auf die Patenterteilung:
**27.06.2007 Patentblatt 2007/26**

(21) Anmeldenummer: **02769466.0**

(22) Anmeldetag: **04.05.2002**

(51) Int Cl.:
***C08L 95/00*** *(2006.01)* ***C08J 9/00*** *(2006.01)*

(86) Internationale Anmeldenummer:
**PCT/EP2002/004925**

(87) Internationale Veröffentlichungsnummer:
**WO 2002/092694 (21.11.2002 Gazette 2002/47)**

(54) **VERFAHREN ZUR HERSTELLUNG VON SCHAUMBITUMEN MIT VERBESSERTER SCHAUMSTABILITÄT UND VERBESSERTEM SCHAUMVOLUMEN**

METHOD FOR PRODUCING FOAM BITUMEN WITH IMPROVED FOAM STABILITY AND IMPROVED FOAM VOLUME

PROCEDE DE PRODUCTION DE BITUME MOUSSE PRESENTANT UNE STABILITE ET UN VOLUME DE MOUSSE AMELIORES

(84) Benannte Vertragsstaaten:
**AT BE CH CY DE DK ES FI FR GB GR IE IT LI LU MC NL PT SE TR**

(30) Priorität: **17.05.2001 DE 10123907**

(43) Veröffentlichungstag der Anmeldung:
**24.03.2004 Patentblatt 2004/13**

(73) Patentinhaber: **Goldschmidt GmbH**
**45127 Essen (DE)**

(72) Erfinder:
- **BALLANDIES, Jürgen**
**45327 Essen (DE)**
- **HOLTHOFF, Hubert**
**59457 Werl (DE)**
- **Dr. Michael KEUP**
**D-45147 Essen (DE)**

(56) Entgegenhaltungen:
**DE-A- 2 053 340**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 399 513 B1

Printed by Jouve, 75001 PARIS (FR)

## Beschreibung

Gegenstand der Erfindung ist ein Verfahren zur Herstellung von Schaumbitumen mit verbesserter Schaumstabilität und verbessertem Schaumvolumen.

Nach DIN 55 946 Tl. 1 (12/1983) ist Bitumen die Bezeichnung für die bei der schonenden Aufbereitung von Erdölen gewonnenen, dunkelfarbigen, halbfesten bis springharten, schmelzbaren, hochmolekularen Kohlenwasserstoff-Gemische und die in Schwefelkohlenstoff löslichen Anteile der natürlichen Asphalte sowie Erdwachs, Montanwachs.

Bitumen wird verwendet im Bautenschutz als Anstrichstoff oder als Vergussmasse. Weitere Anwendungsgebiete sind Abdichtungsmittel gegen Grundwasser, als elektrisches Isoliermaterial, in der Dachpappen-Industrie, hauptsächlich aber als Bindemittel für eine Vielzahl von organischen und anorganischen Substraten wie Kunststoffen, Papier, Pappe, recycelbaren Stoffen wie Bauschutt oder Schlacken aus industriellen Verfahren, problematische asbesthaltige Stoffe, insbesondere aber für im Straßenbau üblicherweise verwendete Kiese und Sande, Schotter, Splitt.

Da die gebräuchlichen Bitumina bei normalen Temperaturen fest sind, müssen sie zur Erzielung eines auf den Substraten haftenden Überzugs verflüssigt werden.

Das kann durch Erhitzen auf entsprechend hohe Verflüssigungstemperaturen geschehen. Nachteilig ist hierbei, dass der Prozess sehr energieaufwendig ist und durch die Verdampfung niedrigsiedender Bitumenbestandteile eine spürbare Umweltbelästigung auftritt.

Die Lösung von Bitumen in entsprechenden organischen Lösungsmitteln umgeht zwar diese Probleme, hat aber ebenfalls den Nachteil, dass das Lösungsmittel beim Verdunsten über einen langen Zeitraum die Umwelt belastet und außerdem toxikologische Bedenken aufwirft.

Der Austausch des Lösungsmittels gegen Wasser erfordert zur Herstellung stabiler verwendbarer Dispersionen/Emulsionen einen erheblichen Anteil an Tensiden. Diese werden durch Regenwasser ausgewaschen und somit ebenfalls langfristig in die Umgebung abgegeben.

Ein weiteres Verfahren Bitumen im Straßenbau einzusetzen, ist die Verarbeitung zu Schaumbitumen. Als Schaumbitumen wird Bitumen bezeichnet, welches mittels Wasser und Luft bei Temperaturen oberhalb 140 °C aufgeschäumt wird und als eine Mischung aus Luft, Wasser und Bitumen auf die zu bindenden Aggregate aufgetragen wird.

Mit Schaumbitumen gebundene Mineralstoffe bieten im Straßenbau deutliche Vorteile gegenüber anderen vergleichbaren Technologien: Schaumbitumen ist hervorragend geeignet für die Stabilisierung von Mineralstoffen und Sanden. Der Schaum bindet sich sofort an die Gesteinsoberfläche, besonders an die Feinanteile der Mineralstoffmischung, wobei auch feuchte Oberflächen ausreichend benetzt werden.

Wegen ihrer erhöhten Temperatur- und Verformungsbeständigkeit eignen sich die so hergestellten Bitumen/Gesteinsmischungen (welche auch als Asphalt bezeichnet werden) besonders als Material für Trag- und Binderschichten im Straßenbau.

Daneben finden aber auch Recyclinganwendungen wie die Einkapselung von Stoffen aus industriellen Verfahren wie Hochofen-, Metallhütten- u. Phosphorschlacke, insbesondere von problematischen asbesthaltigen Materialien zunehmend Interesse.

Um die Mineralstoffe gut einzukapseln und/oder zu benetzen, muss der Bitumenschaum zwei grundlegende Voraussetzungen erfüllen: einmal ein genügend großes Schaumvolumen sowie eine ausreichende Stabilität, bevor er merklich in sich zusammenfällt.

Diese Kriterien, der Expansionsgrad und die so genannte Halbwertzeit (Zeit in der das maximale Schaumvolumen um 50 % geschrumpft ist), sind kritische Charakteristiken des Bitumenschaums und hängen von einer Vielzahl von einander abhängigen Parametern ab, welche zur Zeit nur äußerst unzureichend erklärt oder abgeschätzt werden können.

Durch Zugabe von Additiven hat man versucht, Schaumvolumen und Schaumstabilität weiter in Richtung auf die Erfordernisse der Praxis zu verbessern, da bei Zugabe von insbesondere mineralischen Aggregaten der Schrumpfungsprozess stark beschleunigt wird.

So werden gemäß JP-A 2000219762 (CA-133:154518) quaternäre Ammoniumsalze auf Basis von längerkettigen Aminen und Alkylimidazolinen als Zusätze beschrieben, welche in Mengen von 0,01 bis 10 Gew.-% dem Bitumen zugesetzt werden.

Gemäß JP-A 62172039 (CA-108:76723) werden Bitumen in mischbaren Lösungsmitteln wie trifunktionellen Polyetherpolyolen gelöst, und unter Mitverwendung amin- und zinnhaltiger Katalysatoren sowie Wasser und Silikonöl zu Polyurethanschäumen aufgeschäumt.

Gemäß JP-A 61115956 (CA-105:119752) wird Bitumen mit Butadien-Styrol-Gummi und Azocarbondiamid als Treibmittel gemischt und auf 160 °C aufgeheizt.

Die erhaltenen Schäume sollen eine verbesserte dynamische Stabilität aufweisen.

Daneben ist auch die Bitumenherkunft, dessen Qualität sowie das Raffinerieverfahren von erheblicher Bedeutung. Die Gründe für unzureichende Schaumbildung und Schaumstabilität sind nicht immer erkenntlich, da die Bitumenzusammensetzung komplex ist und bei den Raffinerieverfahren Antischaummittel wie beispielsweise Silikone mitverwendet werden. Es wird aber angenommen, dass diese Silikone einen negativen Einfluss auf das Schaumverhalten haben.

Überraschenderweise wurde nun gefunden, dass bestimmte Silikonverbindungen entgegen den bisher vorliegenden Erfahrungen in der Lage sind, Volumen und Beständigkeit von geschäumten Bitumen nicht nur nicht nachteilig zu beeinflussen, sondern im Gegenteil sogar einen positiven Effekt aufweisen.

Eine Aufgabe der vorliegenden Erfindung, die Verbesserung der Stabilität und des Volumens von geschäumten Bitumen, wird dadurch gelöst, dass als Additive zu ihrer Verbesserung spezielle Silikonverbindungen mitverwendet werden.

Ein Gegenstand der Erfindung ist daher ein Verfahren zur Herstellung von Schaumbitumen aus Bitumen, Wasser und Additiven, welches dadurch gekennzeichnet ist, dass als Additiv mindestens eine Silikonverbindung der allgemeinen Formel

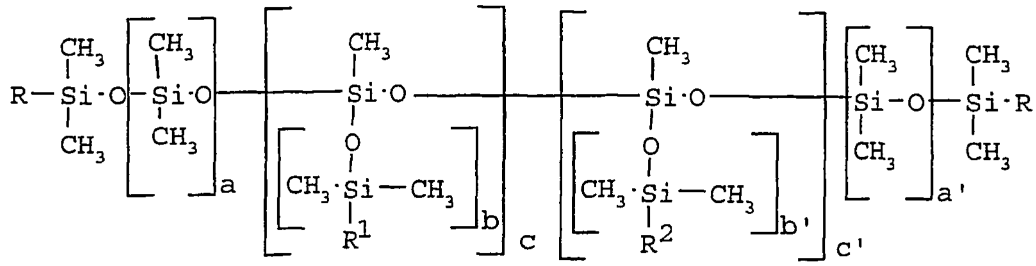

mitverwendet wird, in der

| | |
|---|---|
| R, $R^1$ und $R^2$ | im durchschnittlichen Molekül gleich oder verschieden sein können und einen Alkylrest mit 1 bis 30, vorzugsweise 8 bis 22 Kohlenstoffatomen bedeuten oder den Rest $-Z-(C_nH_2nO-)_mR_3$ bedeuten, wobei $R_3$ ein Wasserstoffrest oder ein Alkylrest mit 1 bis 8 Kohlenstoffatomen ist,<br>Z ein zweiwertiger Rest der Formel -O-, $-(CH_2)_p-O-$ oder $-CH_2-CH(CH_3)-CH_2-O-$ mit p = 2 bis 6,<br>n einen mittleren Zahlenwert von 2,7 bis 4,0,<br>m einen mittleren Zahlenwert von 5 bis 130, |
| a und a’ | zusammen einen mittleren Zahlenwert von 4 bis 1500, |
| b und b’ | zusammen einen mittleren Zahlenwert von 0 bis 100 und |
| c und c’ | zusammen einen mittleren Zahlenwert von 0 bis 50 haben. |

In der Formel hat R vorzugsweise die Bedeutung eines Methylrestes, $R_1$ vorzugsweise die Bedeutung eines Alkylrestes mit 1 bis 30, insbesondere 8 bis 22 Kohlenstoffatomen und $R_2$ die eines Polyetherrestes, bei dem Z -O- oder $-(CH_2)_p-O-$, mit p = 3 oder 4 ist. Es resultiert für den Polyetherrest dann die Formel $-(CH_2)_3-O-(C_nH_{2n}O-)_mR_3$ und/oder $-(CH_2)_4-O-(C_nH_{2n}O-)_mR_3$.

n hat einen mittleren Zahlenwert von 2,7 bis 4,0, wobei ein Zahlenwert von 2,7 bis 3 bevorzugt ist. Dieser mittlere Zahlenwert ergibt sich bei der Herstellung des Polyethers durch blockweise oder statistische Anlagerung entsprechender Mengen Ethylenoxid und Propylenoxid, wobei auch gegebenenfalls höhere Alkylenoxide eingesetzt werden können, mit einem von n = ca. 2,7 bis 3,5.

m hat einen mittleren Zahlenwert von 5 bis 130 und gibt die mittlere Anzahl der Oxyalkyleneinheiten im Polyetherest an. Bevorzugt ist für m ein mittlerer Zahlenwert von 6 bis 50.

$R_3$ ist ein Wasserstoffrest oder ein Alkylrest mit 1 bis 8 Kohlenstoffatomen. Besonders bevorzugt ist ein Alkylrest mit 1 bis 5 Kohlenstoffatomen, insbesondere der Butylrest.

Die Indices a, a’, b, b’ c, c’ haben vorzugsweise folgende Werte:

a und a’ zusammen einen mittleren Zahlenwert von 4 bis 800,
b und b’ zusammen einen mittleren Zahlenwert von 0 bis 50,
c und c’ zusammen einen mittleren Zahlenwert von 1 bis 30.

Ganz besonders bevorzugt sind Verbindungen in denen $R_1$ ein Alkylrest mit 6 bis 22 C-Atomen, $R_2$ ein Polyetherrest $-(CH_2)_4-O-C_2H_4O-)_mR_3$ und/oder $-(CH_2)_4-O-CH_2-CH(CH_3)-CH_2O)_mR_3$ ist, worin m ein mittlerer Zahlenwert von 6 bis 50, insbesondere ca. 10 bis 30 ist, b und b’ = 0 und das Verhältnis von (a+a’):c:c’=(10 bis 200) : (3 bis 30) : (0 bis 10) insbesondere von (a+a’):c:c’=(60 bis 80) : (15 bis 25) : (0 bis 5) beträgt.

Ein weiterer Gegenstand der Erfindung ist ein Bitumenschaum, hergestellt unter Mitverwendung mindestens einer Silikonverbindung der allgemeinen Formel

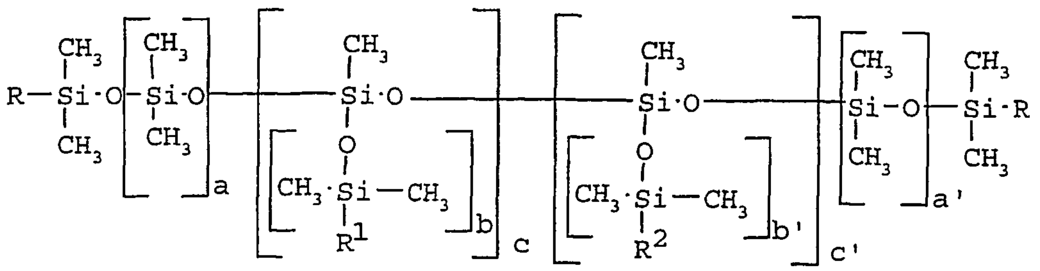

in der

R, $R^1$ und $R^2$ im durchschnittlichen Molekül gleich oder verschieden sein können und einen Alkylrest mit 1 bis 30, vorzugsweise 8 bis 22 Kohlenstoffatomen bedeuten oder den Rest $-Z-(C_nH_2nO-)_mR_3$ bedeuten, wobei $R_3$ ein Wasserstoffrest oder ein Alkylrest mit 1 bis 8 Kohlenstoffatomen ist,
Z ein zweiwertiger Rest der Formel -O-, $-(CH_2)_p-O-$ oder $-CH_2-CH(CH_3)-CH_2-O-$ mit p = 2 bis 6,
n einen mittleren Zahlenwert von 2,7 bis 4,0,
m einen mittleren Zahlenwert von 5 bis 130,

a und a' zusammen einen mittleren Zahlenwert von 4 bis 1500,
b und b' zusammen einen mittleren Zahlenwert von 0 bis 100 und
c und c' zusammen einen mittleren Zahlenwert von 0 bis 50 haben.

Ein weiterer Gegenstand der Erfindung ist die Verwendung von Schaumbitumen, enthaltend mindestens eine der Verbindungen des Anspruchs 1, zum Verkleben von Substraten wie insbesondere im Straßenbau verwendbare Mineralstoffe.

Ein weiterer Gegenstand der Erfindung ist eine schäumbare Bitumenmischung, enthaltend Bitumen, Wasser und Additive, dadurch gekennzeichnet, dass als Additiv mindestens eine Silikonverbindung der allgemeinen Formel

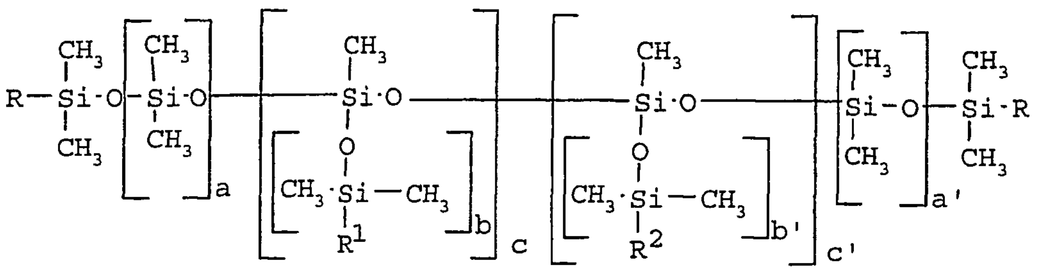

mitverwendet wird, in der

R, $R^1$ und $R^2$ im durchschnittlichen Molekül gleich oder verschieden sein können und einen Alkylrest mit 1 bis 30, vorzugsweise 8 bis 22 Kohlenstoffatomen bedeuten oder den Rest $-Z-(C_nH_2nO-)_mR_3$ bedeuten, wobei $R_3$ ein Wasserstoffrest oder ein Alkylrest mit 1 bis 8 Kohlenstoffatomen ist,
Z ein zweiwertiger Rest der Formel -O-, $-(CH_2)_p-O-$ oder $-CH_2-CH(CH_3)-CH_2-O-$ mit p = 2 bis 6,
n einen mittleren Zahlenwert von 2,7 bis 4,0,
m einen mittleren Zahlenwert von 5 bis 130,

a und a' zusammen einen mittleren Zahlenwert von 4 bis 1500,
b und b' zusammen einen mittleren Zahlenwert von 0 bis 100 und
c und c' zusammen einen mittleren Zahlenwert von 0 bis 50 haben.

Weitere Gegenstände der Erfindung sind durch die Ansprüche gekennzeichnet.

Überraschenderweise wurde gefunden, dass mit den erfindungsgemäß mitverwendeten Polysiloxanverbindungen auch Bitumina verschäumt werden können, welche normalerweise keine technisch verwendbaren Schäume liefern, da entweder die Halbwertszeit nur wenige Sekunden beträgt und/oder die Schaumvolumina nicht groß genug sind. Die technischen Eigenschaften von leicht zu verschäumenden Bitumina werden durch Mitverwendung der erfindungsgemäßen Verbindungen nochmals stark verbessert. Dies ist um so überraschender, da diese Verbindungen bekannterweise in der Technik bisher als Entschäumer verwendet werden.

Der Bitumenschaum wird im Prinzip dadurch hergestellt, dass eine Mischung aus Luft und geringen Mengen an kaltem Wasser (etwa 1 bis 5 Gew.-%, bezogen auf Bitumen) und ein auf ca. 140 bis 200 °C aufgeheiztes Bitumen in eine Expansionskammer injiziert werden. Das Wasser verdampft dabei explosionsartig und treibt die Mischung mit hohem Druck durch eine Zerstäuberdüse, wodurch ein Bitumenschaum mit einem 15 bis 25 mal höheren Volumen gegenüber dem Ausgangsbitumen erzeugt wird. Dieser Schaum wird auf die Zuschlagstoffe aufgetragen.

Um diese gut zu benetzen, muss der Bitumenschaum als Grundvoraussetzung insbesondere einmal ein ausreichend großes Volumen (Expansionsgrad) aufweisen und zum anderen eine genügende Stabilität (Halbwertszeit) besitzen. Daher werden diese Kriterien auch zur Beurteilung der Schaumqualität herangezogen.

Das Expansionsverhältnis (Ex) ist definiert als das Verhältnis des maximalen Schaumvolumens [Vmax] zum Volumen des Bitumens [Vmin] : Ex = [Vmax]/[Vmin]. Die Volumina werden durch einen Meßstab auf 1 cm genau bestimmt.

Die Halbwertszeit (T1/2) ist die Zeit, in der Schaum nach Erreichung des Maximalvolumens auf die Hälfte des Maximalvolumens zusammenschrumpft. Das jeweilige Schaumvolumen wird durch einen Meßstab bestimmt, die Zeit wiederum mittels Stoppuhr auf 1 Sekunde genau gemessen.

Angestrebt wird ein Schaum mit möglichst großem Volumen bei gleichzeitig möglichst langer Halbwertszeit. Da beide Werte in die Beurteilung der Schaumqualität eingehen, wurde als neues Qualitätskriterium, der sogenannten Schaumindex (foam index FI) vorgeschlagen.

Gemäß dem Vortrag von KJ Jenkins, MFC van de Ven und J. de Groot auf der 7$^{th}$ Conference on Asphalt Pavements for Southern Africa, wurde bei der Auswertung der Laborergebnisse bisher die Tatsache ignoriert, dass der Schaum bereits während der Aussprühzeit schrumpft und daher das gemessene Schaumvolumen (ERm) vom tatsächlichen maximalen Volumen (ERa), in Abhängigkeit der Halbwertszeit der Schäume, beträchtlich abweichen kann. Zur Bestimmung dieses Verhältnisses (ERm/ERa) wurde ein Korrekturfaktor (c) vorgeschlagen, der in die Formel zur Ermittlung des Schaumindexes FI eingeführt wird:

$$FI = \frac{-T1/2}{\ln 2}\left[4 - ERm - 4\ln\left[\frac{4}{ERm}\right]\right] + \left[\frac{1+c}{2c}\right] * ERm * ts$$

| | |
|---|---|
| FI = | Schaumindex; |
| ERm = | maximale Expansionsrate; |
| T1/2 = | Halbwertszeit, Zeit in sec in der das Schaumvolumen um die Hälfte geschrumpft ist; |
| ts = | Sprühzeit; |
| c = | Korrekturfaktor, entnommen den Konferenzunterlagen. |

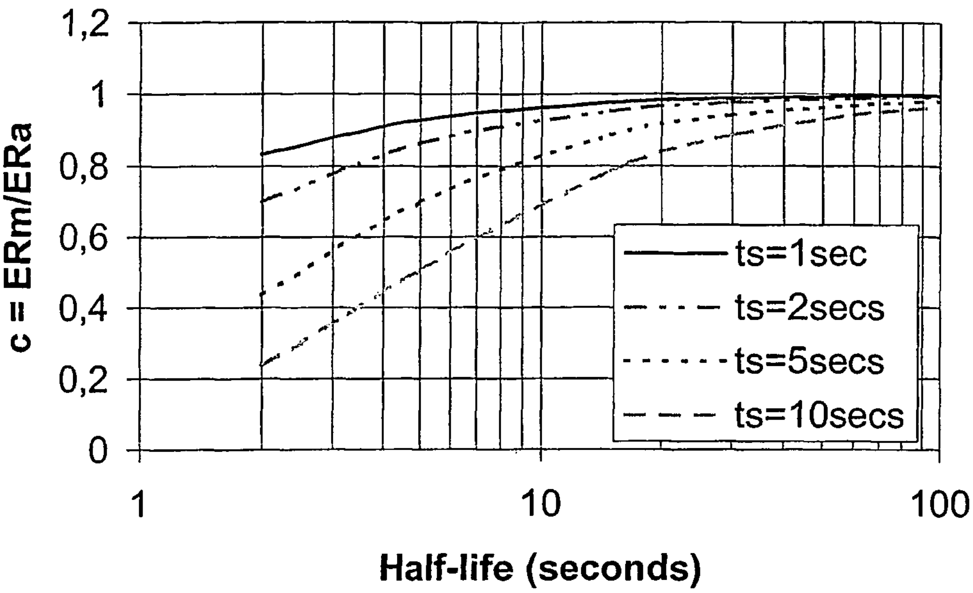


Da die Schaumeigenschaften im wesentlichen abhängig sind von der verwendeten Bitumensorte, der Bitumentemperatur, dem Luftdruck und insbesondere dem Wassergehalt, müssen die in die Expansionskammer geleiteten Volumenströme sowie die Versuchsbedingungen sorgfältig aufeinander abgestimmt werden. Im allgemeinen wird bei Bitumentemperaturen von ca. 140 bis 200 °C, Wassergehalten von ca. 1 bis 5 Gew.-%, bezogen auf Bitumen, und einem Luftdruck bis ca. 5 bar gearbeitet.

Dem als Treibmittel mitverwendeten Wasser werden zur Verbesserung der anwendungstechnischen Eigenschaften des Schaums gegebenenfalls Zusatz- und Hilfsstoffe zugegeben. Die erfindungsgemäß mitverwendeten Additive werden ebenfalls vorzugsweise dem Wasser beigemischt, wobei die Mengen im Bereich von ca. 0,01 bis 5 Gew.-%, vorzugsweise ca. 0,02 bis 2 Gew.-%, bezogen auf Bitumen, liegen.

Erfindungsgemäß können prinzipiell alle Bitumina verschäumt werden. Die Wahl des eingesetzten Typs wird in erster Linie von der technischen Anwendung bestimmt. Bevorzugt werden die im Straßenbau üblicherweise verwendeten Qualitäten 15, 25, 45, 65, 80, 200, 300, 400, insbesondere Bitumina der Penetration 70 bis 200 (Typ B 80 bis Typ B 200).

Versuchsdurchführung:

Für die nachfolgenden Beispiele wurde ein Bitumen Typ B 200 E der Firma NYNAS verwendet. Die Versuche wurden durchgeführt mit der Schaumbitumen-Laboranlage WLB 10 der Firma Wirtgen, D-53578 Windhagen, Deutschland, entsprechend den in der Betriebsanleitung gegebenen Instruktionen.

In die Expansionskammer wurde das auf 170 °C aufgeheizte Bitumen mit einem Druck von 6,5 bar, die Luft mit einem Druck von 6 bar und das Wasser (20 °C) mit einem Druck von 5 bar eingetragen. Die Ansatzgröße betrug jeweils 500 g, der Bitumenfluss 100 g/sec, die Sprühzeit 5 sec und die Menge an erfindungsgemäß mitverwendetem Additiv 0,025 Gew.-%, bezogen auf Bitumen. Die angegebenen Messwerte sind Mittelwerte aus drei Messungen.

Versuchsergebnisse:

| | Additiv 1 | | | | Additiv 2 | | | |
|---|---|---|---|---|---|---|---|---|
| Wasser Gew.-% | ERm | T1/2 | ERa | FI | ERm | T1/2 | ERa | FI |
| 1,0 | 8,4 | 364,8 | 8,4 | 784 | 8,1 | 336,6 | 8,1 | 650 |
| 2,0 | 20,2 | 158,7 | 20,4 | 2320 | 19,6 | 139,4 | 19,9 | 1963 |

(fortgesetzt)

| | Additiv 1 | | | | Additiv 2 | | | |
|---|---|---|---|---|---|---|---|---|
| Wasser Gew.-% | ERm | T1/2 | ERa | FI | ERm | T1/2 | ERa | FI |
| 3,0 | 27,8 | 69,0 | 28,6 | 1741 | 27,2 | 57,7 | 28,1 | 1431 |
| 4,0 | 31,1 | 30,0 | 33,1 | 978 | 30,7 | 23,9 | 33,2 | 799 |
| 5,0 | 30,1 | 13,1 | 34,8 | 505 | 30,4 | 9,9 | 30,4 | 429 |

| | Additiv 3 | | | | Additiv 7 | | | |
|---|---|---|---|---|---|---|---|---|
| Wasser Gew.-% | ERm | T1/2 | ERa | FI | ERm | T1/2 | ERa | FI |
| 1,0 | 8,6 | 324,9 | 8,6 | 751 | 8,1 | 417 | 8,1 | 798 |
| 2,0 | 22,3 | 120,0 | 22,3 | 2097 | 21,7 | 272 | 21,9 | 4421 |
| 3,0 | 31,6 | 44,3 | 33,5 | 1399 | 32,2 | 178 | 32,5 | 5243 |
| 4,0 | 36,5 | 16,4 | 40,9 | 754 | 39,6 | 116 | 40,2 | 4615 |
| 5,0 | 37,1 | 6,0 | 50,1 | 427 | 43,8 | 76 | 44,9 | 3521 |

| | Additiv 9 | | | Additiv 10 | | | | |
|---|---|---|---|---|---|---|---|---|
| Wasser Gew.-% | ERm | T1/2 | ERa | FI | ERm | T1/2 | ERa | FI |
| 1,0 | 8,4 | 389 | 8,4 | 834 | 8,0 | 80 | 8,2 | 183 |
| 2,0 | 18,0 | 249 | 18,1 | 2948 | 19,4 | 35 | 20,5 | 560 |
| 3,0 | 23,5 | 160 | 23,8 | 2989 | 27,1 | 16 | 30,4 | 500 |
| 4,0 | 24,7 | 102 | 25,2 | 2104 | 31,3 | 7 | 40,6 | 372 |
| 5,0 | 21,7 | 66 | 22,3 | 1149 | 31,9 | 3 | 56,8 | 306 |

| | Additiv 11 | | | | Bitumen ohne Additiv | | | |
|---|---|---|---|---|---|---|---|---|
| Wasser Gew.-% | ERm | T1/2 | ERa | FI | ERm | T1/2 | ERa | FI |
| 1,0 | 8,4 | 67 | 8,6 | 179 | 10,1 | 57 | 10,4 | 246 |
| 2,0 | 15,5 | 32 | 16,4 | 359 | 15,9 | 30 | 16,9 | 357 |
| 3,0 | 21,4 | 15 | 24,2 | 345 | 20,1 | 16 | 22,6 | 330 |
| 4,0 | 25,9 | 7 | 33,6 | 295 | 22,8 | 9 | 28,0 | 281 |
| 5,0 | 29,1 | 3 | 51,9 | 277 | 24,0 | 5 | 34,3 | 238 |

Die Versuche mit den Additiven 1, 2, 3, 7 und 9 zeigen beim Vergleich der sprunghaft verbesserten FI-Werte den Vorteil bei Mitverwendung der erfindungsgemäßen Additive zu den nicht erfindungsgemäßen Additiven 10 und 11 sowie dem reinen Bitumen ohne Additiv.

Es bedeuten:

Additiv 1 Polysiloxan BC 793 der Firma Goldschmidt in dem b + b', c + c' > 0 und R, $R_1$ und $R_2$ Polyethylenoxid/ Polypropylenoxidketten mit Molgewichten > 1000 sind,

Additiv 2 Polysiloxan B 1484 der Firma Goldschmidt in dem b + b', c + c' > 0 und R, $R_1$ und $R_2$ überwiegend Polypropylenoxidketten mit Molgewichten > 1000 sind,

(fortgesetzt)

| | |
|---|---|
| Additiv 3 | Polysiloxan B 1959 der Firma Goldschmidt in dem b + b', c + c' > 0 und R, $R_1$ und $R_2$ überwigend Polyethylenoxidketten mit Molgewichten > 1000 sind, |
| Additiv 7 | Polysiloxan TEGO® Addibit FS 700 der Firma Goldschmidt in dem b + b', c + c' = 0 und R $-CH_3$, $R_1$ ein Fettalkylrest und $R_2$ überwigend Polyethylenoxidketten sind, |
| Additiv 9 | Polysiloxan TEGOPREN® 6814 der Firma Goldschmidt in dem b + b', c + c' = 0 und R $-CH_3$, $R_1$ und $R_2$ Fettalkylreste sind. |

Vergleichsversuche:

| | |
|---|---|
| Additiv 10 | Si-freier Polyether mit Polyethylen und Polypropylenketten und einem Molgewicht > 1000, |
| Additiv 11 | Si-freier Polyether mit Polypropylenketten und einem Molgewicht > 1000. |

## Patentansprüche

1. Verfahren zur Herstellung von Schaumbitumen aus Bitumen, Wasser und Additiven, **dadurch gekennzeichnet, dass** als Additiv mindestens eine Silikonverbindung der allgemeinen Formel

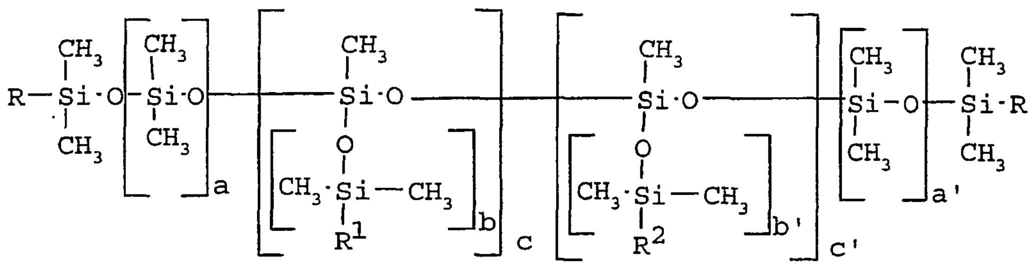

mitverwendet wird, in der

R, $R^1$ und $R^2$ im durchschnittlichen Molekül gleich oder verschieden sein können und einen Alkylrest mit 1 bis 30, vorzugsweise 8 bis 22 Kohlenstoffatomen bedeuten oder den Rest $-Z-(C_nH_2nO-)_mR_3$ bedeuten, wobei

$R_3$ ein Wasserstoffrest oder ein Alkylrest mit 1 bis 8 Kohlenstoffatomen ist,
Z ein zweiwertiger Rest der Formel -O-, $-(CH_2)_p-O-$ oder $-CH_2-CH(CH_3)-CH_2-O-$ mit p = 2 bis 6,
n einen mittleren Zahlenwert von 2,7 bis 4,0,
m einen mittleren Zahlenwert von 5 bis 130,

a und a' zusammen einen mittleren Zahlenwert von 4 bis 1500,
b und b' zusammen einen mittleren Zahlenwert von 0 bis 100 und
c und c' zusammen einen mittleren Zahlenwert von 0 bis 50 haben.

2. Verfahren zur Herstellung von Schaumbitumen, **dadurch gekennzeichnet, dass** als Additiv mindestens eine Silikonverbindung der allgemeinen Formel mitverwendet wird in der

R die Bedeutung eines Methylrestes,
$R_1$ die Bedeutung eines Alkylrestes mit 1 bis 30, insbesondere 8 bis 22 Kohlenstoffatomen und
$R_2$ die Bedeutung eines Polyetherrestes, bei dem

Z -O- oder $-(CH_2)_p-O-$, mit p = 3 oder 4,
$-(CH_2)_3-O-(C_nH_{2n}O-)_mR_3$ und/oder

- $(CH_2)_4$-O-$(C_nH_{2n}O-)_mR_3$ ist,
$R_3$ ein Wasserstoffrest oder ein Alkylrest mit 1 bis 8 Kohlenstoffatomen ist.

3. Verfahren zur Herstellung von Schaumbitumen gemäß Anspruch 1 und 2, **dadurch gekennzeichnet, dass** als Additiv mindestens eine Silikonverbindung der allgemeinen Formel mitverwendet wird in der n einen mittleren Zahlenwert von 2,7 bis 3,0, und m einen mittleren Zahlenwert von 6 bis 50 hat.

4. Verfahren zur Herstellung von Schaumbitumen gemäß den Ansprüchen 1 bis 3, **dadurch gekennzeichnet, dass** als Additiv mindestens eine Silikonverbindung der allgemeinen Formel mitverwendet wird in der a und a' zusammen einen mittleren Zahlenwert von 4 bis 800, b und b' zusammen einen mittleren Zahlenwert von 0 bis 50, c und c' zusammen einen mittleren Zahlenwert von 1 bis 30 aufweisen.

5. Verfahren zur Herstellung von Schaumbitumen gemäß den Ansprüchen 1 bis 3, **dadurch gekennzeichnet, dass** als Additiv mindestens eine Silikonverbindung der allgemeinen Formel mitverwendet wird in der

R ein Methylrest,
$R_1$ ein Alkylrest mit 6 bis 22 C-Atomen,
$R_2$ ein Polyetherrest - $(CH_2)_4$-O-$(C_2H_4O-)_mR_3$ und/oder -$(CH_2)_4$-O-$(CH_2$-$CH(CH_3)$-$CH_2O)_mR_3$, worin

m ein mittlerer Zahlenwert von 6 bis 50, insbesondere ca. 10 bis 30 ist,

b und b' = 0 und das Verhältnis von (a+a') :c:c'= (10 bis 200) : (3 bis 30):(0 bis 10) insbesondere von a+a') :c:c'=(60 bis 80) : (15 bis 25):(0 bis 5) beträgt.

6. Bitumenschaum, hergestellt unter Mitverwendung mindestens einer Silikonverbindung der allgemeinen Formel

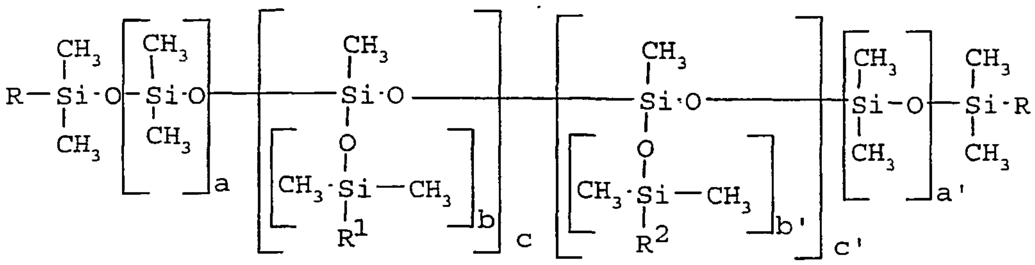

in der

R, $R^1$ und $R^2$ im durchschnittlichen Molekül gleich oder verschieden sein können und einen Alkylrest mit 1 bis 30, vorzugsweise 8 bis 22 Kohlenstoffatomen bedeuten oder den Rest -Z-$(C_nH_2nO-)_mR_3$ bedeuten, wobei

$R_3$ ein Wasserstoffrest oder ein Alkylrest mit 1 bis 8 Kohlenstoffatomen ist,
Z ein zweiwertiger Rest der Formel -O-, -$(CH2)_p$-O- oder -$CH_2$-$CH(CH_3)$-$CH_2$-O- mit p = 2 bis 6,
n einen mittleren Zahlenwert von 2,7 bis 4,0,
m einen mittleren Zahlenwert von 5 bis 130,

a und a' zusammen einen mittleren Zahlenwert von 4 bis 1500,
b und b' zusammen einen mittleren Zahlenwert von 0 bis 100 und
c und c' zusammen einen mittleren Zahlenwert von 0 bis 50 haben.

7. Bitumenschaum gemäß Anspruch 6, hergestellt unter Mitverwendung mindestens einer Silikonverbindung in der

R die Bedeutung eines Methylrestes,
$R_1$ die Bedeutung eines Alkylrestes mit 1 bis 30, insbesondere 8 bis 22 Kohlenstoffatomen und
$R_2$ die Bedeutung eines Polyetherrestes hat, bei dem

Z -O- oder $-(CH_2)_p$-O-, mit p = 3 oder 4,
- $(CH_2)_3$-O- $(C_nH_{2n}O-)_mR_3$ und/oder
$-(CH_2)_4$-C)-$(C_nH_{2n}O-)_m$R3 ist,

$R_3$ ein Wasserstoffrest oder ein Alkylrest mit 1 bis 8 Kohlenstoffatomen ist.

**8.** Bitumenschaum gemäß Anpsruch 6, hergestellt unter Mitverwendung mindestens einer Silikonverbindung in der a und a' zusammen einen mittleren Zahlenwert von 4 bis 800, b und b' zusammen einen mittleren Zahlenwert von 0 bis 50, c und c' zusammen einen mittleren Zahlenwert von 1 bis 30 aufweisen.

**9.** Bitumenschaum gemäß Anspruch 6, hergestellt unter Mitverwendung mindestens einer Silikonverbindung in der

R ein Methylrest,
$R_1$ ein Alkylrest mit 6 bis 22 C-Atomen,
$R_2$ ein Polyetherrest $-(CH_2)_4-O-(C_2H_4O-)_mR_3$ und/oder - $(CH_2)$ 4-O- $(CH_2-CH(CH_3)-CH_2O)_mR_3$, worin

m ein mittlerer Zahlenwert von 6 bis 50, insbesondere ca. 10 bis 30 ist,

b und b' = 0 und das Verhältnis von (a+a'):c:c'(10 bis 200) : (3 bis 30) : (0 bis 10) insbesondere von (a+a') :c:c' (60 bis 80) : (15 bis 25) : (0 bis 5) beträgt.

**10.** Verwendung von Schaumbitumen, enthaltend mindestens eine der Verbindungen des Anspruchs 1, zum Verkleben von Substraten wie insbesondere im Straßenbau verwendbare Mineralstoffe.

## Claims

**1.** Process for producing foamed bitumen from bitumen, water, and additives, **characterized in that** use is made as additive of at least one silicone compound of the general formula

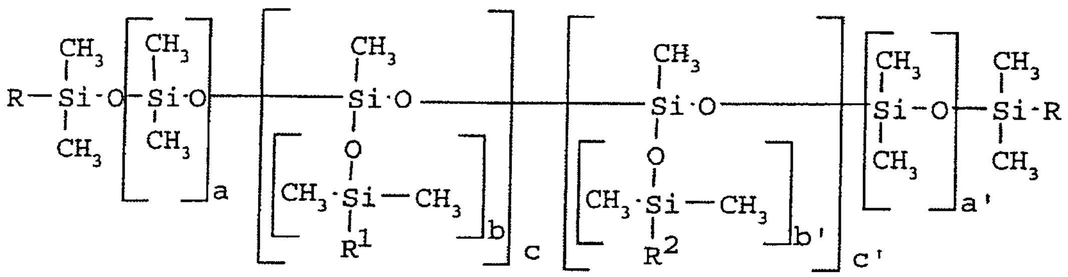

in which

R, $R^1$ and $R^2$ in the average molecule can be identical or different and denote an alkyl radical having 1 to 30, preferably 8 to 22 carbon atoms or the radical -Z- $(C_nH_{2n}O-)_mR_3$, where
$R_3$ is a hydrogen radical or an alkyl radical having 1 to 8 carbon atoms,
Z is a divalent radical of the formula -O-, $-(CH_2)_p$-O- or $-CH_2-CH(CH_3)-CH_2$-O- with p = 2 to 6,
n is an average numerical value from 2.7 to 4.0,
m is an average numerical value from 5 to 130,
a and a' together have an average numerical value from 4 to 1500,
b and b' together have an average numerical value from 0 to 100, and
c and c' together have an average numerical value from 0 to 50.

**2.** Process for producing foamed bitumen, **characterized in that** use is made as additive of at least one silicone compound of the general formula in which

R has the definition of a methyl radical,

$R_1$ has the definition of an alkyl radical having 1 to 30, in particular 8 to 22 carbon atoms,
$R_2$ has the definition of a polyether radical in which

Z is -O- or $-(CH_2)_p-O-$, with p = 3 or 4,
$-(CH_2)_3-O-(C_nH_{2n}O-)_mR_3$ and/or
$-(CH_2)_4-O-(C_nH_{2n}O-)_mR_3$,
$R_3$ is a hydrogen radical or an alkyl radical having 1 to 8 carbon atoms.

3. Process for producing foamed bitumen according to Claim 1 and 2, **characterized in that** use is made as additive of at least one silicone compound of the general formula in which n has an average numerical value of from 2.7 to 3.0 and m has an average numerical value of from 6 to 50.

4. Process for producing foamed bitumen according to Claims 1 to 3, **characterized in that** use is made as additive of at least one silicone compound of the general formula in which a and a' together have an average numerical value of from 4 to 800, b and b' together have an average numerical value of from 0 to 50, and c and c' together have an average numerical value of from 1 to 30.

5. Process for producing foamed bitumen according to Claims 1 to 3, **characterized in that** use is made as additive of at least one silicone compound of the general formula in which

R is a methyl radical,
$R_1$ is an alkyl radical having 6 to 22 carbon atoms,
$R_2$ is a polyether radical $-(CH_2)_4-O-(C_2H_4O-)_mR_3$ and/or $-(CH_2)_4-O-(CH_2-CH(CH_3)CH_2O)_mR_3$, in which

m is an average numerical value of 6 to 50, in particular from about 10 to 30,

b and b' = 0, and the ratio (a+a'):c:c'=(10 to 200) : (3 to 30) : (0 to 10), in particular a + a') :c:c'=(60 to 80) : (15 to 25):(0 to 5).

6. Bitumen foam produced using at least one silicone compound of the general formula

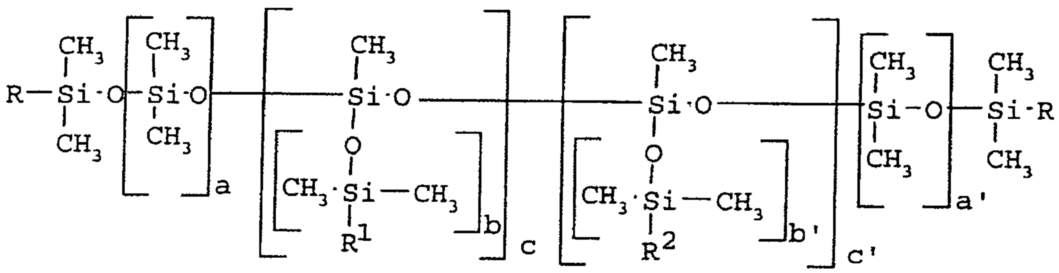

in which

R, $R^1$ and $R^2$ in the average molecule can be identical or different and denote an alkyl radical having 1 to 30, preferably 8 to 22 carbon atoms or the radical $-Z-(C_nH_{2n}O-)_mR_3$, where

$R_3$ is a hydrogen radical or an alkyl radical having 1 to 8 carbon atoms,
Z is a divalent radical of the formula -O-, $-(CH_2)_p-O-$ or $-CH_2-CH(CH_3)-CH_2-O-$with p = 2 to 6,
n is an average numerical value from 2.7 to 4.0,
m is an average numerical value from 5 to 130,

a and a' together have an average numerical value from 4 to 1500,
b and b' together have an average numerical value from 0 to 100, and
c and c' together have an average numerical value from 0 to 50.

7. Bitumen foam according to Claim 6, produced using at least one silicone compound in which

R has the definition of a methyl radical,
$R_1$ has the definition of an alkyl radical having 1 to 30, in particular 8 to 22 carbon atoms,
$R_2$ has the definition of a polyether radical in which

Z is -O- or $-(CH_2)_p-O-$, with p = 3 or 4,
$-(CH_2)_3-O-(C_nH_{2n}O-)_mR_3$ and/or
$-(CH_2)_4-O-(C_nH_{2n}O-)_mR_3$,
$R_3$ is a hydrogen radical or an alkyl radical having 1 to 8 carbon atoms.

**8.** Bitumen foam according to Claim 6, produced using at least one silicone compound in which a and a' together have an average numerical value of from 4 to 800, b and b' together have an average numerical value of from 0 to 50, and c and c' together have an average numerical value of from 1 to 30.

**9.** Bitumen foam according to Claim 6, produced using at least one silicone compound in which

R is a methyl radical,
$R_1$ is an alkyl radical having 6 to 22 carbon atoms,
$R_2$ is a polyether radical $-(CH_2)_4-O-(C_2H_4O-)_mR_3$ and/or $-(CH_2)_4-O-(CH_2-CH(CH_3)CH_2O)_mR_3$, in which

m is an average numerical value of 6 to 50, in particular from about 10 to 30,

b and b' = 0, and the ratio (a+a') :c:c' is (10 to 200) : (3 to 30) : (0 to 10), in particular (a + a') :c:c' (60 to 80) : (15 to 25) : (0 to 5).

**10.** Use of foamed bitumen comprising at least one of the compounds of Claim 1 for adhesively bonding substrates such as, in particular, mineral materials which can be used in roadbuilding.

## Revendications

**1.** Procédé pour la préparation de bitume en mousse à partir de bitume, d'eau et d'additifs, **caractérisé en ce qu'**on utilise conjointement, comme additif, au moins un composé de silicone de formule générale

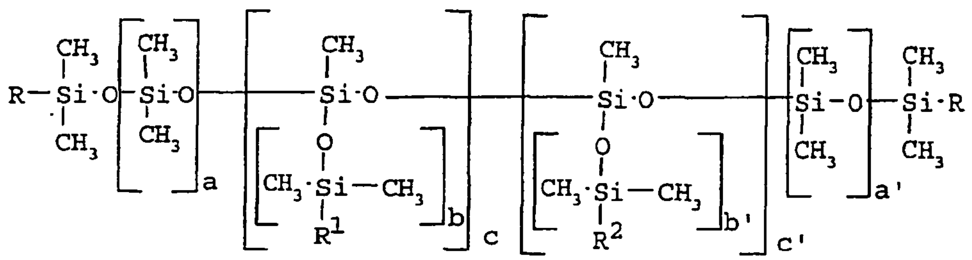

où

R, $R^1$ et $R^2$, dans une molécule moyenne, peuvent être identiques ou différents et signifient un radical alkyle comprenant 1 à 30 atomes de carbone, de préférence 8 à 22 atomes de carbone ou le radical $-Z-(C_nH_{2n}O-)_mR_3$ où

$R_3$ représente un radical hydrogène ou un radical alkyle comprenant 1 à 8 atomes de carbone,
Z représente un radical divalent de formule -O-, $-(CH_2)_p-O-$ ou $-CH_2-CH(CH_3)-CH_2-O-$ avec p = 2 à 6,
n présente une valeur numérique moyenne de 2,7 à 4,0,
m présente une valeur numérique moyenne de 5 à 130,

a et a' présentent ensemble une valeur numérique moyenne de 4 à 1 500,
b et b' présentent ensemble une valeur numérique moyenne de 0 à 100 et
c et c' présentent ensemble une valeur numérique moyenne de 0 à 50.

**2.** Procédé pour la préparation de bitume en mousse **caractérisé en ce qu'**on utilise conjointement, comme additif, au moins un composé de silicone de la formule générale, où
R signifie un radical méthyle,
$R_1$ signifie un radical alkyle comprenant 1 à 30, en particulier 8 à 22 atomes de carbone et
$R_2$ signifie un radical polyéther, où

Z représente -O- ou $-(CH_2)_p-O-$, avec p valant 3 ou 4,

$-(CH_2)_3-O-(C_nH_{2n}O)_mR_3$ et/ou

$-(CH_2)_4-O-(C_nH_{2n}O-)_mR_3$,

$R_3$ représente un radical hydrogène ou alkyle comprenant 1 à 8 atomes de carbone.

**3.** Procédé pour la préparation de bitume en mousse selon la revendication 1 et 2, **caractérisé en ce qu'**on utilise conjointement, comme additif, au moins un composé de silicone de la formule générale, où n présente une valeur numérique moyenne de 2,7 à 3,0, et m une valeur numérique moyenne de 6 à 50.

**4.** Procédé pour la préparation de bitume en mousse selon les revendications 1 à 3, **caractérisé en ce qu'**on utilise conjointement, comme additif, au moins un composé de silicone de formule générale, dans laquelle a et a' présentent ensemble une valeur numérique moyenne de 4 à 800, b et b' présentent ensemble une valeur numérique moyenne de 0 à 50, c et c' présentent ensemble une valeur numérique moyenne de 1 à 30.

**5.** Procédé pour la préparation de bitume en mousse selon les revendications 1 à 3, **caractérisé en ce qu'**on utilise conjointement, comme additif, au moins un composé de silicone de la formule générale, où
R représente un radical méthyle,
$R_1$ représente un radical alkyle comprenant 6 à 22 atomes de carbone,
$R_2$ représente un radical polyéther $-(CH_2)_4-O-(C_2H_4O-)_mR_3$ et/ou $-(CH_2)_4-O-(CH_2-CH(CH_3)-CH_2O)_mR_3$, où

m présente une valeur numérique moyenne de 6 à 50, en particulier d'environ 10 à 30,

b et b' = 0 et le rapport de (a+a'):c:c' = (10 à 200) : (3 à 30):(0 à 10) en particulier de (a+a'):c:c' = (60 à 80) : (15 à 25) : (0 à 5).

**6.** Mousse de bitume, préparée en utilisant conjointement au moins un composé de silicone de formule générale

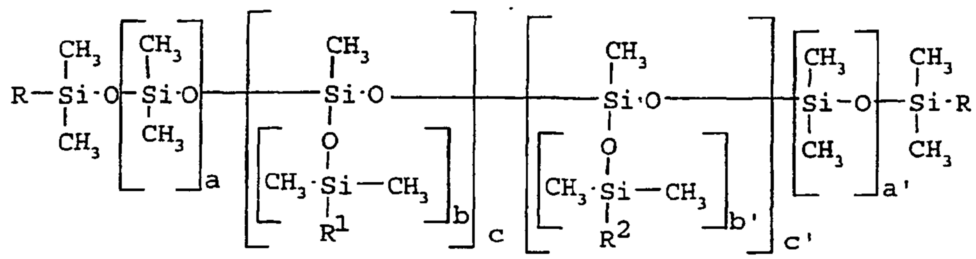

dans laquelle
R, $R^1$ et $R^2$, dans une molécule moyenne, peuvent être identiques ou différents et signifient un radical alkyle comprenant 1 à 30 atomes de carbone, de préférence 8 à 22 atomes de carbone ou le radical $-Z-(C_nH_{2n}O-)_mR_3$ où

$R_3$ représente un radical hydrogène ou un radical alkyle comprenant 1 à 8 atomes de carbone,
Z représente un radical divalent de formule -O-, $-(CH_2)_p-O-$ ou $-CH_2-CH(CH_3)-CH_2-O-$ avec p = 2 à 6,
n présente une valeur numérique moyenne de 2,7 à 4,0,
m présente une valeur numérique moyenne de 5 à 130,

a et a' présentent ensemble une valeur numérique moyenne de 4 à 1 500,
b et b' présentent ensemble une valeur numérique moyenne de 0 à 100 et

c et c' présentent ensemble une valeur numérique moyenne de 0 à 50.

**7.** Mousse de bitume selon la revendication 6, préparée en utilisant conjointement au moins un composé de silicone où R signifie un radical méthyle, $R_1$ signifie un radical alkyle comprenant 1 à 30, en particulier 8 à 22 atomes de carbone et $R_2$ signifie un radical polyéther, où

Z représente -O- ou $-(CH_2)_p-O-$, avec p valant 3 ou 4,

$$-(CH_2)_3-O-(C_nH_{2n}O-)_mR_3 \text{ et/ou}$$

$$-(CH_2)_4-O-(C_nH_{2n}O-)_mR_3,$$

$R_3$ représente un radical hydrogène ou un radical alkyle comprenant 1 à 8 atomes de carbone.

**8.** Mousse de bitume selon la revendication 6, préparée en utilisant conjointement au moins un composé de silicone où a et a' présentent ensemble une valeur numérique moyenne de 4 à 800, b et b' présentent ensemble une valeur numérique moyenne de 0 à 50, c et c' présentent ensemble une valeur numérique moyenne de 1 à 30.

**9.** Mousse de bitume selon la revendication 6, préparée en utilisant conjointement au moins un composé de silicone où R représente un radical méthyle, $R_1$ représente un radical alkyle comprenant 6 à 22 atomes de carbone, $R_2$ représente un radical polyéther $(CH_2)_4-O-(C_2H_4O-)_mR_3$ et/ou $-(CH_2)_4-O-(CH_2-CH(CH_3)-CH_2O)_mR_3$, où

m présente une valeur numérique moyenne de 6 à 50, en particulier d'environ 10 à 30,

b et b' = 0 et le rapport de (a+a'):c:c' = (10 à 200) : (3 à 30):(0 à 10) en particulier de (a+a'):c:c' = (60 à 80) : (15 à 25):(0 à 5).

**10.** Utilisation de bitume en mousse, contenant au moins un des composés de la revendication 1, pour le collage de substrats, tels qu'en particulier des substances minérales utilisables dans la construction des routes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2000219762 A
- CA 133154518
- JP 62172039 A
- CA 10876723
- JP 61115956 A
- CA 105119752